# EUROPÄISCHE PATENTSCHRIFT

(11) **EP 3 159 315 B1**
(45) Veröffentlichungstag und Bekanntmachung des Hinweises auf die Patenterteilung: **03.04.2019**
(21) Anmeldenummer: 16450027.4
(22) Anmeldetag: 11.10.2016
(51) Int. Cl.: C02F 11/04, C02F 3/28

(54) **VORRICHTUNG UND VERFAHREN ZUR GASEINPRESSUNG IN EINEN SCHLAMMBEHÄLTER ZUR SCHLAMMUMWÄLZUNG**
DEVICE AND METHOD FOR GAS INJECTION IN A SLUDGE TANK FOR SLUDGE CIRCULATION
DISPOSITIF ET PROCÉDÉ D'INJECTION DE GAZ DANS UN RÉSERVOIR DE BOUES POUR LA CIRCULATION DES BOUES

(30) Priorität: 22.10.2015 AT 6912015; 19.11.2015 AT 7442015; 19.02.2016 AT 352016 U
(43) Veröffentlichungstag der Anmeldung: 26.04.2017
(73) Patentinhaber: Ulrich, Gregor Anton, 1060 Wien (AT)
(72) Erfinder: Ulrich, Anton, 1060 Wien (AT); Ulrich, Gregor Anton, 1060 Wien (AT)
(74) Vertreter: Miksovsky, Alexander

(56) Entgegenhaltungen:
- EP-A1- 2 706 044
- DE-B- 1 143 490
- DE-C- 441 851
- KR-A- 20140 016 697
- US-A- 3 718 407
- US-A1- 2003 147 791
- US-A1- 2010 021 979
- US-A1- 2013 341 269

## Beschreibung

Die vorliegende Erfindung bezieht sich auf einen Schlammbehälter mit einer Vorrichtung zur Gaseinpressung, umfassend:
- wenigstens eine Leitung zur Einbringung von Gas oberhalb des Bodens des mit einem insbesondere Feststoffe bzw. Partikel enthaltenden Fluid gefüllten Schlammbehälters,
- ein im Wesentlichen vertikal im Schlammbehälter angeordnetes und an beiden Enden offenes Rohr,
wobei die wenigstens eine Leitung in das Rohr zur Einbringung von Gas zumindest am unteren Ende des Rohrs mündet, wobei das Rohr aus einer Mehrzahl von aneinander anschließenden Einzelrohren besteht, wobei jedes Einzelrohr jeweils einen größeren Durchmesser als das darunter vorgesehene Einzelrohr aufweist. Die Erfindung bezieht sich weiters auf ein Verfahren zur Gaseinpressung in einen Schlammbehälter mit einer derartigen Vorrichtung, wobei Gas über wenigstens eine Leitung oberhalb des Bodens des mit einem insbesondere Feststoffe bzw. Partikel enthaltenden Fluid gefüllten Schlammbehälters eingebracht wird, wobei das Gas über die Leitung in ein im Wesentlichen vertikales im Schlammbehälter angeordnetes und an beiden Enden offenes Rohr am unteren Ende des Rohrs eingebracht wird, wobei das Rohr aus einer Mehrzahl von aneinander anschließenden Einzelrohren gebildet wird und jedes Einzelrohr jeweils einen größeren Durchmesser als das darunter vorgesehene Einzelrohr aufweist.

Ein Behälter mit einer Vorrichtung zur Gaseinpressung und ein Verfahren zur Gaseinpressung mit einigen Merkmalen eines Behälters der eingangs genannten Art sind beispielsweise der KR 2014 0016697 A zu entnehmen, wobei jedoch ein Zellstoffkocher nicht unmittelbar mit einem Schlammbehälter vergleichbar ist.

Eine Rührvorrichtung mit mehreren vertikal angeordneten Einzelrohren mit unterschiedlichen Durchmessern unter Einbringung von Gas in wenigstens ein Rohr ist beispielsweise der DE 11 43 490 B zu entnehmen.

Demgegenüber ist der DE 441 851 C ein gattungsgemäßes Verfahren der eingangs genannten Art zur Behandlung von Feststoffen in einem Schlammbehälter zu entnehmen. Ähnliche Vorrichtungen und Verfahren sind auch der EP 2 706 044 A1, der US 2013/341269 A1 oder der US 2010/021979 A1 zu entnehmen.

Betreffend weitere Vorrichtungen und Verfahren zur Behandlung von insbesondere Feststoffen oder Partikel in einem Behälter wird beispielsweise auf die US 2003/147791 A1 oder die US 3 718 407 A verwiesen.

Bei herkömmlichen Leitungen, beispielsweise bei Schlammbehältern bzw. Vorrichtungen gemäß dem oben genannten Stand der Technik, wird ein Gas von oben in das Rohr oder den Schlauch einer Gaslanze eingepresst und tritt in kleinen Gasblasen am Faulturmboden eines Schlammbehälters aus. Die Gasblasen vergrößern sich während des Aufstiegs nach oben und die Verwirbelung findet an der Flüssigkeitsoberkante statt, wobei es nur eine sehr geringe Verwirbelung am Faulturmboden gibt, wo diese eigentlich stattfinden sollte.

Die Ablagerungen am Faulturmboden sind im ersten Jahr etwa 10 cm hoch, im zweiten Jahr gibt es ca. 30 cm zusätzliche Neuablagerungen, im 3. Jahr zusätzliche 40 bis 50 cm, und im vierten Jahr erreichen die Ablagerungen im Schnitt eine Höhe von 1,20 bis 1,50 m schräg aufsteigend zur Faulturmwand - es findet keine Umwälzung mehr statt. Der abgelagerte Altschlamm ist standfest.

Die am Faulturmboden austretenden Gasblasen verursachen Vibrationen, die wiederum zu einer Verdichtung des abgelagerten Altschlammes führen.

Rund um die Gaslanze bildet sich eine Art Kamin, durch welchen das eingepresste Gas wirkungslos nach oben strömt.

Die Erfindung hat es sich zum Ziel gesetzt, einen Schlammbehälter mit einer Vorrichtung zur Gaseinpressung und ein Verfahren der eingangs genannten Art zu schaffen, bei welchen die obigen Probleme vermieden werden und insbesondere derartige Schlammablagerungen mit nachfolgender ausfallender Umwälzung des Altschlammes in einem Schlammbehälter verhindert werden.

Zur Lösung dieser Aufgaben ist ein Schlammbehälter mit einer Vorrichtung der eingangs genannten Art im Wesentlichen dadurch gekennzeichnet, dass in vertikaler Richtung aneinander anschließende Einzelrohre miteinander über eine flexible Aufhängung gekoppelt sind. Durch die Einbringung von Gas zumindest am unteren Ende des im Wesentlichen vertikal angeordneten Rohrs wird der im Schlammbehälter vorhandene bzw. sich absetzende Schlamm bzw. allgemein das Feststoffe bzw. Partikel enthaltende Fluid im Rohr mitgenommen und derart kontinuierlich durch das an seinen beiden Enden offene Rohr abgesaugt und umgewälzt. Die nach oben austretenden Gasblasen im Rohr verhindern bzw. reduzieren die Bildung einer störenden Schwimmschlammschicht, so dass insgesamt verhindert wird, dass sich die in einem derartigen Schlammbehälter im Fluid enthaltenen Feststoffe bzw. Partikel als Altschlamm ablagern und verfestigen und derart einen ordnungsgemäßen Betrieb eines derartigen Schlammbehälters verhindern bzw. eine zusätzliche aufwendige Entfernung des abgelagerten Schlammes erfordern. Da erfindungsgemäß vorgesehen ist, dass das Rohr aus einer Mehrzahl von aneinander anschließenden Einzelrohren besteht, wobei jedes Einzelrohr jeweils einen größeren Durchmesser als das darunter vorgesehene Einzelrohr aufweist, dehnen sich die Gasblasen insbesondere im Bereich der ineinander mündenden Einzelrohre schlagartig aus. Der abgelagerte Faulschlamm wird dadurch kontinuierlich abgesaugt und umgewälzt. Die nach oben und seitlich austretenden Gasblasen verhindern bzw. reduzieren dabei die Bildung einer störenden Schwimmschlammschicht. Da in derartigen Schlammbehältern gegebenenfalls Teilchen bzw. Feststoffe vergleichsweise großer Abmessungen, wie beispielsweise Haare, Sand, Hygieneartikel oder dgl. enthalten sind, welche zur Ausbildung von sogenannten Zöpfen führen können, welche insbesondere im Bereich der Ansaugöffnungen bzw. Aufnahmeöffnungen des vertikalen Rohrs bzw. der vertikal angeordneten Einzelrohre zu Verstopfungen führen können, wird insbesondere zur Verhinderung der Verlegung derartiger Ansaugöffnungen erfindungsgemäß vorgesehen, dass in vertikaler Richtung aneinander anschließende Einzelrohre miteinander über eine flexible Aufhängung gekoppelt sind.

Gemäß einer bevorzugten Ausführungsform der Erfindung ist vorgesehen, dass das Rohr mit einem sich nach oben erweiternden Querschnitt ausgebildet ist. Derart können sich die Gasblasen entsprechend dem Boyle-Mariotte-Gesetz in dem sich nach oben erweiternden Rohr entsprechend dem abnehmenden Umgebungsdruck ausdehnen bzw. expandieren, so dass die Mitnahme bzw. Ansaugung von Feststoffe bzw. Partikel enthaltendem Fluid bzw. allgemein Schlamm verbessert bzw. weiter unterstützt wird.

Für eine Unterstützung der Zuführung des im Rohr durch die aufsteigenden Gasblasen mitzunehmenden Fluids bzw. Schlammes ist gemäß einer weiters bevorzugten Ausführungsform vorgesehen, dass das Rohr an seinem unteren Ende mit einer trompetenförmigen Ansaugöffnung ausgebildet ist und die Mündung der wenigstens einen Leitung in die Ansaugöffnung führt.

Zur Unterstützung des Förder- bzw. Transporteffekts durch die im im Wesentlichen vertikal angeordneten Rohr aufsteigenden Gasblasen und gegebenenfalls in Anpassung an große Erstreckungen bzw. Höhen eines derartigen Rohrs in einem entsprechend große Abmessungen aufweisenden Schlammbehälter ist gemäß einer weiters bevorzugten Ausführungsform vorgesehen, dass in das Rohr eine Mehrzahl von Leitungen an unterschiedlichen Stellen des Umfangs des Rohrs und/oder an unterschiedlichen Höhenpositionen des Rohrs mündet. Derart wird es möglich, bei einem gegebenenfalls große Abmessungen aufweisenden Rohr durch Einbringung an einer Mehrzahl von entlang des Umfangs verteilten Stellen bzw. Positionen eine entsprechend große Gasmenge in das Rohr über gegebenenfalls geringe Abmessungen aufweisende Leitungen einzubringen, und derart eine entsprechend große Förderwirkung zur Umwälzung des Schlammes bzw. des allgemein Feststoffe bzw. Partikel enthaltenden Fluids bereitzustellen. Insbesondere bei großen Längen bzw. Höhen eines derartigen Rohrs kann durch Einbringung von Gas an unterschiedlichen Höhenpositionen ebenfalls die Förder- bzw. Transportwirkung unterstützt werden oder es kann insbesondere bei Vorsehen eines sich erweiternden Querschnitts des Rohrs eine Unterstützung der Förderwirkung insbesondere im Bereich des sich jeweils erweiternden Querschnitts erzielt werden.

In diesem Zusammenhang wird gemäß einer weiters bevorzugten Ausführungsform vorgeschlagen, dass die Einzelrohre an ihrem zum Boden des Schlammbehälters gerichteten Ende im Bereich eines mündenden darunter anschließenden Einzelrohrs schirmartig ausgebildet sind. Ähnlich wie bereits oben erwähnt, lässt sich durch eine derartige schirmartige bzw. trompetenartige Ausbildung des unteren Teilbereichs jedes Einzelrohrs die Aufnahme von in dem im Wesentlichen vertikal angeordneten Rohr zu transportierendem Fluid bzw. Schlamm verbessern.

Zur Unterstützung der Förderwirkung der in dem aus mehreren Einzelrohren gebildeten Rohr mit jeweils sich erweiterndem Durchmesser einzubringenden Gase wird gemäß einer weiters bevorzugten Ausführungsform vorgeschlagen, dass jeweils am unteren Ende eines Einzelrohrs, insbesondere im schirmartigen Bereich wenigstens eine Leitung mündet. Derart lässt sich, wie oben bereits ausgeführt, durch Einbringen an unterschiedlichen Höhenpositionen des Rohrs eine verbesserte Förderwirkung erzielen. Durch Anordnung der wenigstens einen Leitung im schirmartigen bzw. schrägen Bereich zur Einbringung bzw. Einpressung von Gas wird insbesondere zusätzlich verhindert, dass nach einem Abschalten der Gaszufuhr absinkende Partikel bzw. absinkender Schlamm die Gasleitung bzw. insbesondere deren Öffnung bzw. Mündung in das Einzelrohr verlegen bzw. verlegt.

Zur Einstellung von unterschiedlich großen lichten Querschnitten zwischen benachbarten bzw. übereinander angeordneten Einzelrohren und somit zur Beeinflussung der Strömungsverhältnisse, welche darüber hinaus durch die Menge des einzubringenden Gases beinflussbar sind, wird gemäß einer weiters bevorzugten Ausführungsform vorgeschlagen, dass die Einzelrohre relativ zueinander höhenverstellbar im Schlammbehälter angeordnet sind.

Zur Unterstützung der Aufnahme des zu transportierenden Schlammes bzw. Fluids im untersten Bereich des im Wesentlichen vertikal angeordneten Rohrs ist gemäß einer weiters bevorzugten Ausführungsform vorgesehen, dass unterhalb des offenen Endes des im Wesentlichen vertikalen Rohrs eine mit einer Gaszuführung versehene Siebplatte angeordnet ist.

Gemäß einer weiters bevorzugten Ausführungsform ist vorgesehen, dass das Rohr mit einer flexiblen Aufhängung an einer Aufhängevorrichtung des Schlammbehälters festgelegt ist. Eine derartige flexible Aufhängung bzw. Kopplung benachbarter Einzelrohre ermöglicht Ausweichbewegungen der miteinander gekoppelten Einzelrohre, so dass entstandene Zöpfe bzw. allgemein Blockaden von Eintritts- bzw. Ansaugöffnungen durch eine gegenseitige Bewegung von flexibel gekoppelten Einzelrohren noch besser gelöst und diese derart in weiterer Folge abtransportiert werden können.

Die Möglichkeit einer relativen Bewegung zueinander zwischen Einzelrohren wird darüber hinaus dadurch unterstützt, dass flexible Aufhängungen zwischen benachbarten Einzelrohren jeweils zueinander versetzt am Umfang derselben angeordnet bzw. festgelegt sind, wie dies einer weiters bevorzugten Ausführungsform der Erfindung entspricht.

Zur weiteren Unterstützung einer Verhinderung von Verstopfungen bzw. Blockaden insbesondere im Bodenbereich des Schlammbehälters wird gemäß einer weiters bevorzugten Ausführungsform vorgeschlagen, dass die Aufhängung der Einzelrohre mit einer Aufhängung für eine im Bodenbereich des Schlammbehälters angeordnete Räumvorrichtung gekoppelt ist. Durch eine derartige Kopplung der Aufhängung der Einzelrohre mit einer Aufhängung für eine im Bodenbereich des Schlammbehälters angeordnete Räumvorrichtung können insbesondere Ablagerungen unterhalb der Öffnung des zum Boden gerichteten Einzelrohrs verhindert werden.

Für eine entsprechende Verteilung des über die Leitung in das Rohr einzubringenden Gases und insbesondere zur Erzielung kleiner Gasblasen, welche das gegebenenfalls größere Abmessungen aufweisende Rohr möglichst gleichmäßig zur Erzielung eines gleichmäßigen Förder- bzw. Transporteffekts füllen sollen, wird gemäß einer weiters bevorzugten Ausführungsform vorgeschlagen, dass die wenigstens eine Leitung über einen mit einem Sieb und/oder Filter ausgebildeten Verteiler in das Rohr mündet.

Wie oben bereits ausgeführt, weisen derartige Schlammbehälter gegebenenfalls große Abmessungen auf, so dass zur Unterstützung eines gleichmäßigen Förder- bzw. Transporteffekts in derartigen große Abmessungen bzw. Flächen überdeckenden Schlammbehältern darüber hinaus vorgeschlagen wird, dass eine Mehrzahl von jeweils im Wesentlichen vertikal im Schlammbehälter angeordneten Rohren vorgesehen ist, in welche jeweils wenigstens eine Leitung zur Einbringung von Gas mündet, wie dies einer weiters bevorzugten Ausführungsform der Erfindung entspricht. Durch Vorsehen einer entsprechend größeren Anzahl von derartigen Rohren, in welche jeweils wenigstens eine Leitung zur Gaszufuhr mündet, kann somit auch in großflächigen Schlammbehältern eine gleichmäßige Umwälzung des darin enthaltenen Fluids bzw. Schlammes erzielt werden.

Zur Erzielung entsprechender Umgebungsbedingungen in derartigen Schlammbehältern zur Behandlung von Schlamm beispielsweise durch Bakterien oder chemische Zusätze muss üblicherweise eine entsprechende Temperatur des zu behandelnden Fluids bzw. Schlammes eingestellt sein bzw. werden, so dass gegebenenfalls eine zusätzliche Erwärmung des zu behandelnden Fluids bzw. Schlammes vorzusehen ist. Zur Bereitstellung einer derartigen Erwärmung oder zur Unterstützung derselben bei entsprechend verringertem Gesamtenergieaufwand wird gemäß einer weiters bevorzugten Ausführungsform vorgeschlagen, dass die wenigstens eine Leitung aus einem wärmeleitenden Material ausgebildet ist. Insbesondere bei Vorsehen mehrerer im Wesentlichen vertikal angeordneter Rohre und einer entsprechenden Anzahl von Leitungen für die Gaszufuhr lässt sich somit insbesondere bei großflächigen bzw. -volumigen Schlammbehältern eine entsprechend gleichmäßige Erwärmung erzielen.

Zur Vermeidung eines Unterdrucks in dem im Wesentlichen vertikal angeordneten Rohr durch die aufsteigenden Gasblasen insbesondere bei sich erweiterndem Querschnitt ist gemäß einer weiters bevorzugten Ausführungsform vorgesehen, dass das Rohr mit wenigstens einer zusätzlichen Belüftungsöffnung in Abstand von seinen beiden offenen Enden ausgebildet ist.

Gemäß einer weiters bevorzugten Ausführungsform der Erfindung ist vorgesehen, dass das im Wesentlichen vertikal im Schlammbehälter angeordnete Rohr in einem bestehenden Steigrohr des Schlammbehälters mit gegenüber dem Durchmesser des Steigrohrs verringerten Außenabmessungen angeordnet ist. Derart lassen sich insbesondere bestehende Schlammbehälter, welche oftmals mit einem im Wesentlichen zentralen Steigrohr mit vergleichsweise großen Abmessungen ausgebildet sind, einfach mit der erfindungsgemäßen Vorrichtung nachrüsten, ohne einen vergleichsweise hohen Aufwand für eine aufwendige Entfernung eines derartigen Steigrohrs berücksichtigen zu müssen.

Zur Lösung der eingangs angeführten Aufgaben ist darüber hinaus ein Verfahren der oben genannten Art im Wesentlichen dadurch gekennzeichnet, dass in vertikaler Richtung aneinander anschließende Einzelrohre miteinander über eine flexible Aufhängung gekoppelt werden. Wie oben bereits ausgeführt, erfolgt somit ein zuverlässiger Transport von Feststoffe bzw. Teilchen enthaltendem Fluid bzw. Schlamm zur Umwälzung des Schlammes zur Vermeidung einer Ablagerung und Verfestigung von Altschlamm.

Zur Unterstützung der Förder- bzw. Transportwirkung wird gemäß dem erfindungsgemäßen Verfahren bevorzugt vorgeschlagen, dass das Gas an unterschiedlichen über den Umfang des Rohrs verteilten Positionen und/oder an unterschiedlichen Höhenpositionen des Rohrs eingebracht wird.

Zur weiteren Unterstützung der Förder- bzw. Transportwirkung wird gemäß einer weiters bevorzugten Ausführungsform des erfindungsgemäßen Verfahrens vorgeschlagen, dass von dem Gas mitzuführendes, in dem Schlammbehälter vorhandenes und insbesondere Feststoffe bzw. Partikel aufweisendes Fluid an unterschiedlichen Höhenpositionen in das Rohr eingebracht wird. Eine derartige Einbringung von Fluid bzw. Schlamm an unterschiedlichen Höhenpositionen ist insbesondere bei Vorsehen von einem aus mehreren Einzelrohren bestehenden im Wesentlichen vertikal angeordneten Rohr mit jeweils sich erweiterndem Durchmesser günstig.

Zur Erzielung eines Heizeffekts des zu behandelnden Schlamms wird gemäß einer weiters bevorzugten Ausführungsform vorgeschlagen, dass das durch die Leitung transportierte Gas vor dem Einbringen in die Leitung über einen Wärmetauscher geführt wird.

Die Erfindung wird nachfolgend anhand von in der beiliegenden Zeichnung schematisch dargestellten Ausführungsbeispielen näher erläutert. In dieser zeigen:
Fig. 1 eine schematische Darstellung teilweise im Schnitt einer ersten Ausführungsform eines Schlammbehälters mit einer Vorrichtung zur Gaseinpressung, dessen Ausbildung nicht durch die Erfindung umfasst ist;
Fig. 2 in einer zu Fig. 1 ähnlichen Darstellung ebenfalls eine schematische Darstellung einer abgewandelten Ausführungsform eines Schlammbehälters mit einer Vorrichtung zur Gaseinpressung, dessen Ausbildung nicht durch die Erfindung umfasst ist;
Fig. 3 wiederum eine schematische Darstellung einer weiteren abgewandelten Ausführungsform eines Schlammbehälters mit einer Vorrichtung zur Gaseinpressung, dessen Ausbildung nicht durch die Erfindung umfasst ist, wobei das sich im Wesentlichen vertikal erstreckende Rohr einen gleichbleibenden Durchmesser aufweist;
Fig. 4 eine weitere schematische Darstellung einer weiteren abgewandelten Ausführungsform eines Schlammbehälters mit einer Vorrichtung zur Gaseinpressung, dessen Ausbildung nicht durch die Erfindung umfasst ist, wobei ein Rohr mit sich erweiterndem Durchmesser bzw. Querschnitt ähnlich der Ausbildung gemäß Fig. 1 in einem bestehenden Steigrohr eines Schlammbehälters angeordnet wird;
Fig. 5 eine schematische Darstellung einer erfindungsgemäßen Ausführungsform eines Schlammbehälters mit einer Vorrichtung zur Gaseinpressung zur Durchführung des erfindungsgemäßen Verfahrens ähnlich der Ausbildung gemäß Fig. 2 mit voneinander getrennten Einzelrohren mit jeweils ansteigendem Durchmesser, wobei eine flexible Kopplung bzw. Aufhängung zwischen benachbarten Einzelrohren vorgesehen ist;
Fig. 6a und 6b schematische Darstellungen, woraus ersichtlich ist, dass bei der Ausbildung gemäß Fig. 5 eine Einbringung des Gases nicht nur an unterschiedlichen Höhenpositionen sondern auch an zueinander versetzten Positionen in Umfangsrichtung erfolgt;
Fig. 7 ebenfalls bei der Ausbildung gemäß Fig. 5 eine schematische Darstellung der an unterschiedlichen Positionen entlang des Umfangs vorgesehenen Kopplung zwischen aneinander anschließenden Einzelrohren; und
Fig. 8 eine weitere schematische Darstellung einer weiteren abgewandelten Ausführungsform gemäß der Erfindung, wobei der Schlammbehälter insbesondere einen im Wesentlichen flachen Bodenbereich aufweist und eine Aufhängung für Einzelrohre mit einer Aufhängung für eine Räumvorrichtung im Bodenbereich gekoppelt ist.

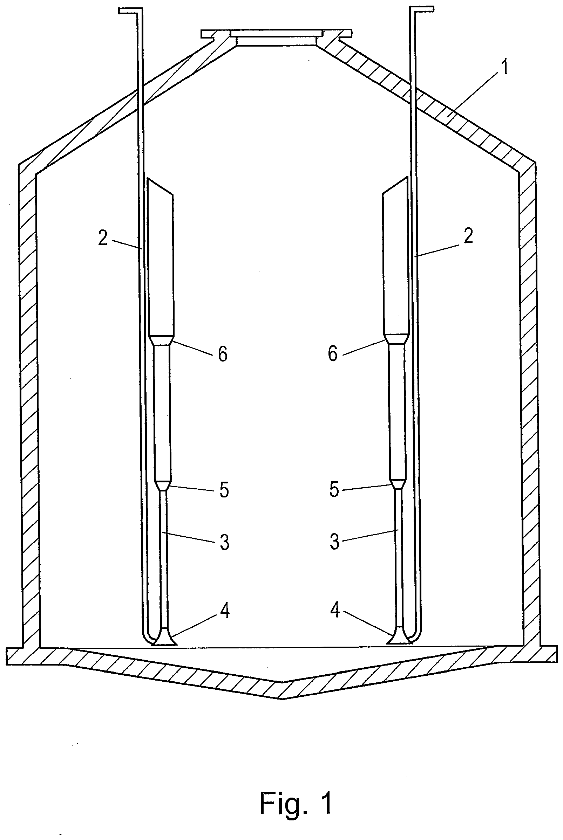

Gemäß Fig. 1 ist ein nicht durch die Erfindung umfasster Schlammbehälter 1 vorgesehen, in dem der eingebrachte Schlamm umgewälzt wird. Die Umwälzung erfolgt dabei über Gas, das durch Leitungen 2 in den im Behälter 1 befindlichen Schlamm eingebracht wird.

Um Schlammablagerungen mit Stillstand einer bekannten Schlammumwälzung als Folge zu vermeiden, wird ein unten offenes Rohr 3 parallel zur Leitung 2 nach oben geführt und an seinem unteren Ende an die Leitung 2 angeschlossen. Das untere Ende ist als trompetenförmige Ansaugöffnung 4 ausgebildet. Das Rohr 3 ist bei 5 und 6 jeweils erweitert.

Die im Rohr 3 aufsteigenden und insbesondere bei den Erweiterungen 5 und 6 expandierenden Gasblasen bewirken eine Saugwirkung, die dazu führt, dass der noch weiche Schlamm vom Behälterrand vor seiner Verfestigung angesaugt und oben zur Mitte hin wieder eingeleitet wird.

Dadurch werden verdichtete Ablagerungen verhindert und es bilden sich keine verhärteten Altschlammkegel unterhalb des Rohrs 3.

In Fig. 1 sind nur zwei Rohre 3 dargestellt, jedoch werden in der Praxis mehrere Rohre 3 im Behälter 1 verteilt sein. Überhaupt sind im Rahmen der Erfindung zahlreiche Abänderungen möglich, so können beispielsweise die Leitungen 2 nicht als starre Rohre im engeren Sinn des Worts, sondern auch als Schläuche oder ähnliche Gasleitungen ausgebildet sein.

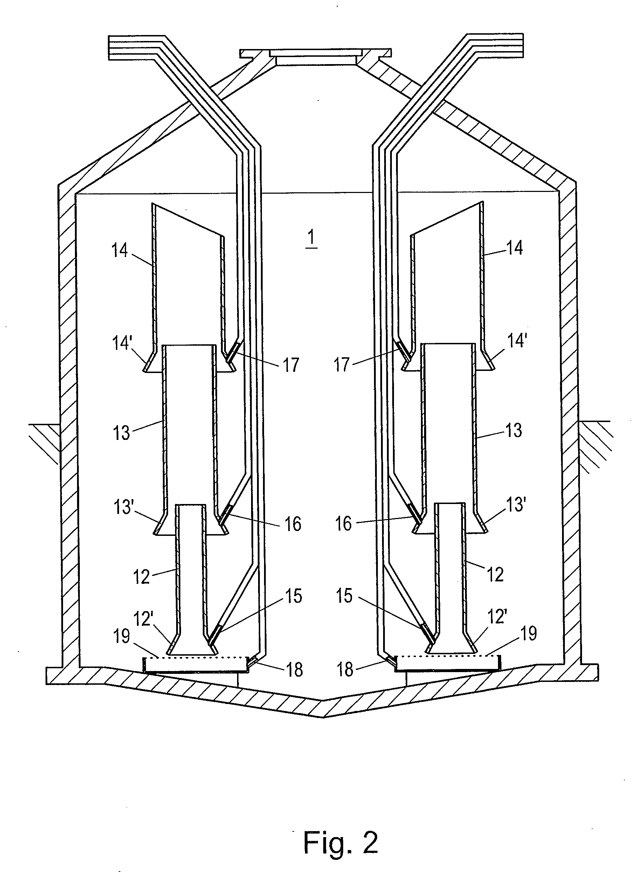

Gemäß Fig. 2 ist ein wiederum mit 1 bezeichneter Schlammbehälter vorgesehen, welcher nicht durch die Erfindung umfasst ist, in dem der im Behälter befindliche Schlamm umgewälzt wird. Im Schlammbehälter 1 sind Einzelrohre 12, 13 und 14 mit jeweils anderem Durchmesser angeordnet. Das Einzelrohr 12 ragt dabei in das Einzelrohr 13 mit größerem Durchmesser und dieses in das Einzelrohr 14 mit noch größerem Durchmesser hinein.

An ihrem unteren Ende sind die Einzelrohre 12, 13 und 14 schirmartig ausgebildet, d.h. das untere Ende bildet einen Schirm 12', 13' und 14'.

In diese Schirme 12', 13' und 14', also im Bereich der ineinander mündenden Einzelrohre 12, 13 und 14 ist jeweils eine Leitung 15, 16 und 17 angeschlossen, durch die Gas eingepresst wird.

Unterhalb des untersten Einzelrohrs 12 ist eine mit einer Gaszuführung 18 versehene Siebplatte 19 angeordnet.

Die in den Einzelrohren 12, 13 und 14 aufsteigenden und expandierenden Gasblasen bewirken eine Saugwirkung, die dazu führt, dass der noch weiche Schlamm vom Behälterrand vor seiner Verfestigung angesaugt und zur Mitte hin wieder eingeleitet wird.

Dadurch werden verdichtete Ablagerungen verhindert und es bilden sich keine verhärteten Altschlammkegel. Die durch die Schirme 12', 13' und 14' seitlich austretenden Gasblasen verhindern die Bildung einer Schwimmschlammschicht.

Durch das aufsteigende Gas wird zusätzlich bei jedem einzelnen Schirm 12', 13' und 14' die Umgebungsflüssigkeit angesaugt und zusätzlich umgewälzt.

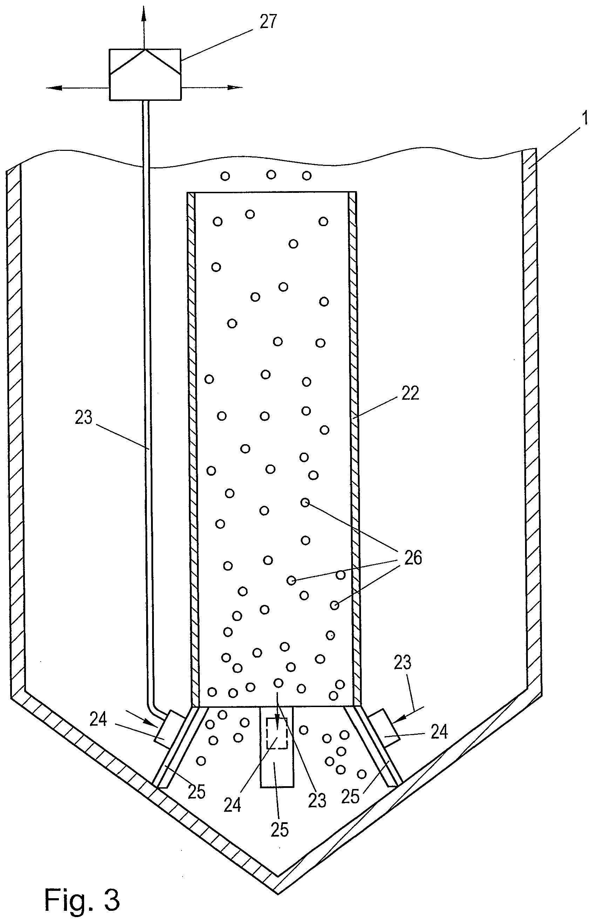

In Fig. 3 ist eine weitere abgewandelte Ausführungsform dargestellt, wobei in einem wiederum mit 1 bezeichneten, nicht durch die Erfindung umfassten Schlammbehälter ein im Wesentlichen mittig bzw. zentral angeordnetes, im Wesentlichen vertikal verlaufendes Rohr 22 mit vergleichsweise großen Abmessungen vorgesehen ist, welches gegenüber den vorangehenden Ausführungsformen einen gleichbleibenden Durchmesser bzw. Querschnitt aufweist.

Wie auch bei den vorangehenden Ausführungsformen ist das Rohr 22 sowohl an seinem oberen als auch an seinem unteren Ende offen, wobei über eine schematisch mit 23 angedeutete Leitung Gas in den Bereich des unteren Endes des Rohrs 22 in einen Verteiler 24 zugeführt wird. In diesem Verteiler 24 ist beispielsweise eine Siebplatte und/oder ein Filter zur Erzielung möglichst kleiner Luftblasen enthalten, wobei dieser Gasverteiler 24 jeweils an einem Fuß- bzw. Abstützelement 25 des Rohrs 22 vorgesehen ist.

Wie aus Fig. 3 ersichtlich, sind beispielsweise über den Umfang verteilt drei derartige Abstützelemente 25 vorgesehen, an welchen jeweils ein Verteiler 24 angeordnet ist, über welchen jeweils durch eine Leitung ähnlich der Leitung 23 Gas zugeführt wird, wie dies durch die Pfeile 23 angedeutet wird.

Durch ein Einbringen von Gas im unteren Bereich der Öffnung bzw. Mündung des Rohrs 22 entstehen Gasblasen 26, welche in dem Inneren des Rohrs 22 aufsteigen und derart über das untere Ende des Rohrs 22 in dem Schlammbehälter 1 enthaltenes Fluid mit Feststoffen bzw. Partikel oder allgemein Schlamm in Richtung zur Oberseite des Schlammbehälters 1 transportieren bzw. umwälzen.

Zur Erzielung eines Heizeffekts durch das durch die Leitungen 23 einzubringende Gas ist in Fig. 3 darüber hinaus angedeutet, dass das in der Leitung 23 zu transportierende Gas über einen Wärmetauscher 27 geführt wird, um derart eine für eine Erwärmung des im Schlammbehälter 1 enthaltenen Fluids einfache Wärmezufuhr bereitzustellen.

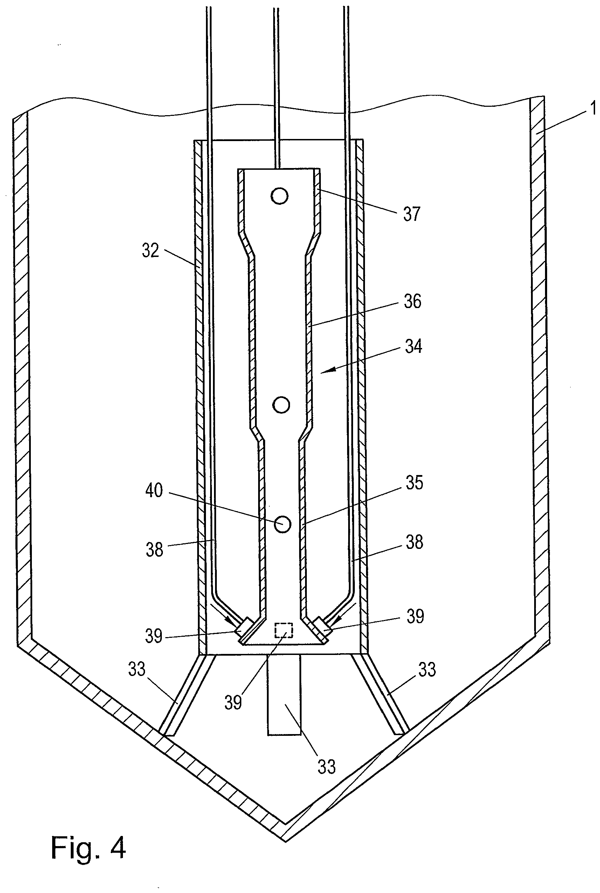

Bei der Ausbildung gemäß Fig. 4 ist in einem Schlammbehälter 1, welcher nicht durch die Erfindung umfasst ist, ein bestehendes Steigrohr 32 mit vergleichsweise großem Durchmesser vorgesehen, welches über Abstützelemente bzw. Füße 33 am Boden des Schlammbehälters 1 abgestützt ist, wobei zwischen den einzelnen Abstützelementen 33 jeweils ausreichend große Freiräume für einen Eintritt von Fluid bzw. Schlamm in das Innere des Steigrohrs 32 verbleiben.

Insbesondere für eine Nachrüstung von bestehenden Anlagen ist bei der Ausbildung gemäß Fig. 4 im Inneren des Steigrohrs 32 ein im Wesentlichen vertikal verlaufendes Rohr 34 vorgesehen, welches in der Ausbildung gemäß Fig. 1 Teilbereiche 35, 36 und 37 mit sich jeweils erweiterndem Durchmesser bzw. Querschnitt aufweist. Über eine Mehrzahl von Leitungen 38 erfolgt wiederum eine Zufuhr von Gas in Verteiler 39 am unteren Ende des Rohrs 34 mit sich erweiterndem Querschnitt bzw. Durchmesser, um derart durch die im Inneren des Rohrs 34 aufsteigenden Gasblasen eine Mitnahme bzw. einen Förder- bzw. Transporteffekt für das im Schlammbehälter 1 enthaltene Fluid zu erzielen.

Zusätzlich sind für einen Druckausgleich Belüftungsöffnungen 40 in den unterschiedlichen Teilbereichen 35, 36 und 37 mit unterschiedlichen Durchmessern angedeutet.

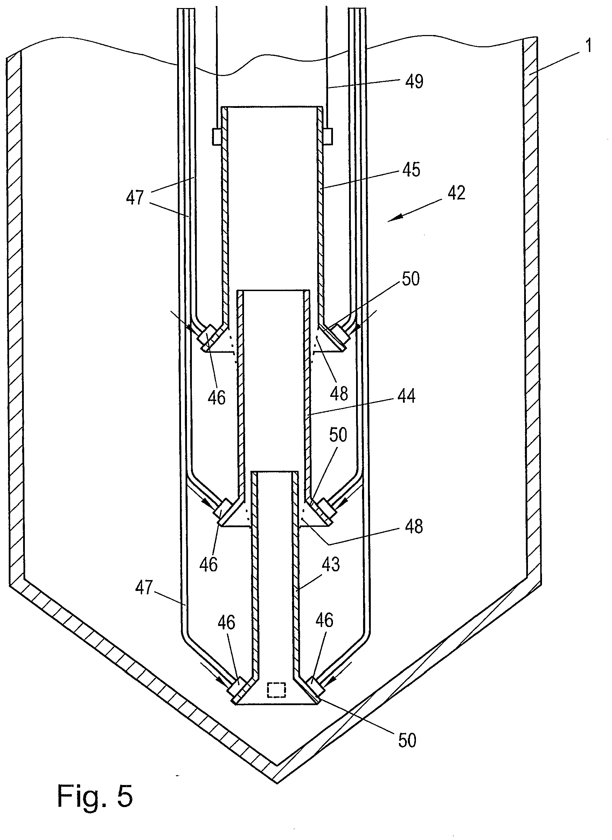

Bei einer Ausführungsform gemäß Fig. 5, welche einen Schlammbehälter 1 gemäß der Erfindung zur Durchführung des erfindungsgemäßen Verfahrens zeigt, findet wiederum ähnlich zu der Ausbildung gemäß Fig. 2 ein aus mehreren Einzelrohren bestehendes, im Wesentlichen vertikales Rohr 42 Verwendung, wobei die Einzelrohre mit jeweils unterschiedlichem und ansteigendem Durchmesser bzw. Querschnitt in Fig. 5 mit 43, 44 und 45 bezeichnet sind.

Jeweils am unteren Ende dieser Einzelrohre 43, 44 und 45 wird Gas über Verteiler 46 verteilt über mehrere Positionen entlang des Umfangs eingebracht, wobei Leitungen zur Zufuhr des Gases lediglich teilweise dargestellt sind und mit 47 bezeichnet sind.

Für eine flexible Kopplung zur Erzielung von Ausgleichsbewegungen sind die Einzelrohre 43, 44 und 45 über schematisch mit 48 angedeutete Aufhängungen gekoppelt, wobei eine Aufhängung des obersten Einzelrohrs 45 mit größtem Durchmesser mit 49 bezeichnet ist. Diese Aufhängung 49 wird an einer nicht näher dargestellten Halterung an der Oberseite des Schlammbehälters 1 festgelegt.

Durch Vorsehen einer derartigen flexiblen Kopplung bzw. Aufhängung 48 bzw. 49 werden Ausgleichs- bzw. Ausweichbewegungen zwischen den Einzelrohren 43, 44 und 45 möglich, um Blockaden bzw. Verstopfungen im Bereich der einander übergreifenden Enden benachbarter Einzelrohre 43, 44 und 45 zu verhindern.

Zur Unterstützung der Einbringung des zu transportierenden Fluids weisen darüber hinaus die Einzelrohre jeweils an ihrem unteren Endbereich einen sich aufweitenden Teilbereich 50 auf, um derart durch eine im Wesentlichen trompetenartig ausgebildete Ansaugöffnung die Einbringung von Fluid bzw. Schlamm zu unterstützen bzw. zu erleichtern.

Ein derartiger sich aufweitender Endbereich, an welchen jeweils über den Umfang verteilt die Verteiler 46 vorgesehen sind, ist auch bei der Ausbildung gemäß Fig. 4 im Bereich der Verteiler 39 angedeutet.

Durch Anordnen der Mündungen der Leitungen 47 bzw. der Verteiler 46 im sich schirmartig bzw. trompetenartig erweiternden unteren Ende der Einzelrohre 43, 44 und 45 kann insbesondere sichergestellt werden, dass bei einem Abschalten der Gaszufuhr absinkender Schlamm bzw. absinkendes Fluid im Bereich dieser Zufuhröffnungen die Gasleitungen 47 nicht verlegt.

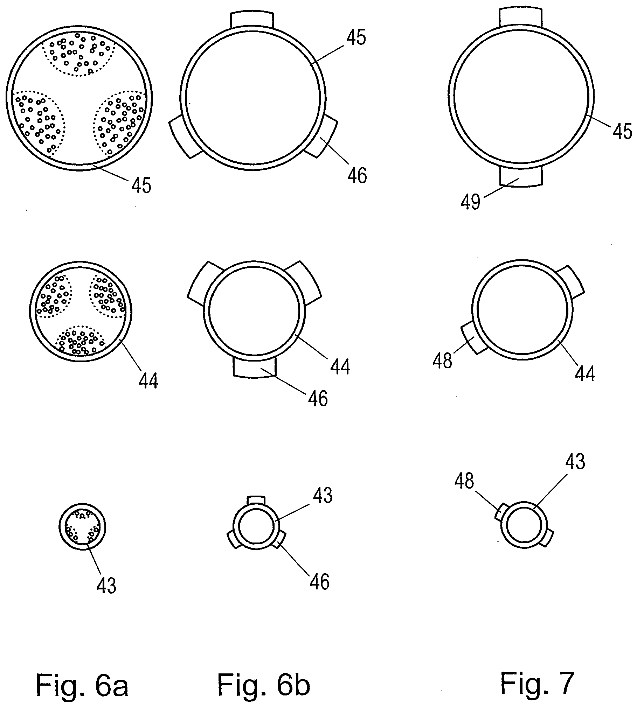

In Fig. 6a und 6b sind schematisch Querschnitte bzw. Ansichten der unterschiedlichen Einzelrohre 43, 44 und 45 dargestellt, woraus ersichtlich ist, dass die Verteiler 46 jeweils an unterschiedlichen Positionen entlang des Umfangs der Einzelrohre 43, 44 und 45 vorgesehen sind. Derart lassen sich im Inneren der Einzelrohre 43, 44 und 45 in Umfangsrichtung jeweils versetzt Bereiche einer bevorzugten Gasbildung erzielen, welche insgesamt auch bei Vorsehen von großen Durchmessern der Einzelrohre 43, 44 und 45 eine gleichmäßige Verteilung von Gasblasen im Inneren der Rohre ermöglichen.

Ähnlich zu der Darstellung gemäß Fig. 6a und 6b sind in Fig. 7 wieder Schnitte bzw. Teilansichten der Einzelrohre 43, 44 und 45 angedeutet, wobei die Positionen der wechselweisen flexiblen Kopplungen 48 bzw. der flexiblen Aufhängung 49 in Umfangsrichtung zueinander versetzt gezeigt sind, um derart die zur Vermeidung einer Verstopfung angestrebten Ausgleichs- bzw. Ausweichbewegungen der Einzelrohre 43, 44 und 45 zu erzielen bzw. zu unterstützen.

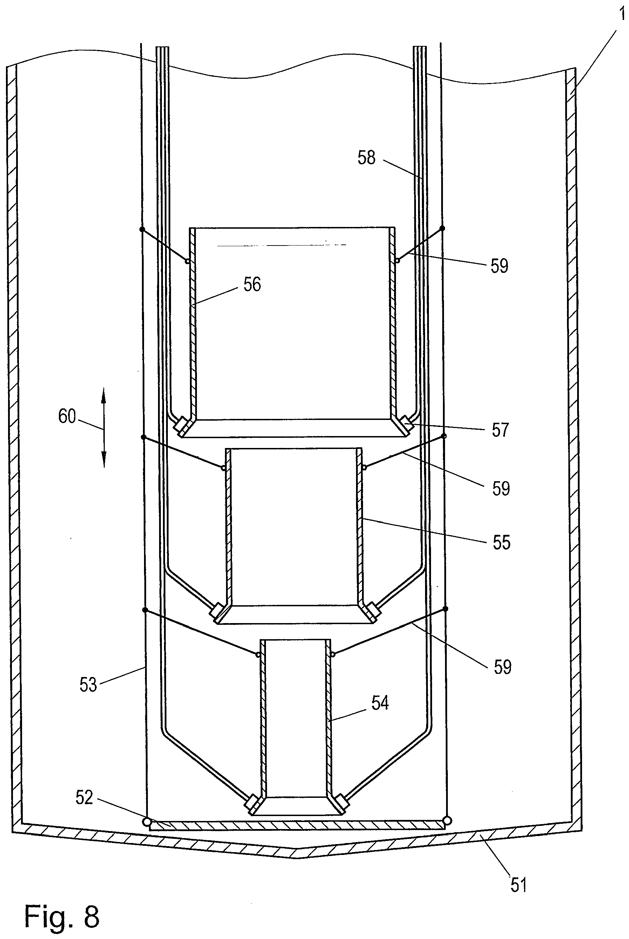

In Fig. 8 ist ein wiederum mit 1 bezeichneter Schlammbehälter gemäß der Erfindung mit einem im Wesentlichen ebenen bzw. flachen Bodenbereich 51 ausgebildet, wobei in diesem Bodenbereich 51 eine Räumvorrichtung 52 vorgesehen ist. Diese Räumvorrichtung 52 ist über seil- bzw. kettenartige Aufhängevorrichtungen 53 mit einer nicht näher dargestellten Halterung bzw. Abstützung im oberen Bereich des Schlammbehälters 1 gekoppelt.

Wie beispielsweise auch bei der Ausführungsform gemäß Fig. 5 ist auch bei der in Fig. 8 dargestellten Ausbildung eine Mehrzahl von übereinander angeordneten Einzelrohren 54, 55, 56 vorgesehen, wobei jeweils in sich schirmartig erweiternden Endbereichen Verteiler 57 vorgesehen sind, in welche jeweils eine Leitung 58 mündet, wobei in Fig. 8 lediglich eine zu dem Einzelrohr 56 führende Leitung 58 dargestellt ist.

Für eine flexible Aufhängung bzw. Lagerung der Einzelrohre 54, 55, 56, um insbesondere Verstopfungen bzw. Blockaden im Bereich der sich schirmartig erweiternden Zutrittsöffnungen zu vermeiden, sind Aufhängungen 59 angedeutet, welche mit der Aufhängung 53 für die Räumvorrichtung 52 gekoppelt sind.

Darüber hinaus ist in Fig. 8 durch einen Doppelpfeil 60 angedeutet, dass relative Höhenpositionen der Einzelrohre 54, 55, 56 geändert werden können, so dass der lichte Querschnitt im Bereich der Zutrittsöffnungen beispielsweise in Anpassung an die Konsistenz des im Schlammbehälters 1 enthaltenden Fluids bzw. Schlamms angepasst werden kann. Eine derartige Höhenverstellbarkeit entsprechend dem Doppelpfeil 60 lässt sich beispielsweise durch entsprechende Änderung bzw. Verstellung der Länge der Aufhängungen 59 in einfacher Weise realisieren.

## Patentansprüche

1. Schlammbehälter mit einer Vorrichtung zur Gaseinpressung, umfassend:
- wenigstens eine Leitung (47, 58) zur Einbringung von Gas oberhalb des Bodens des mit einem insbesondere Feststoffe bzw. Partikel enthaltenden Fluid gefüllten Schlammbehälters (1),
- ein im Wesentlichen vertikal im Schlammbehälter (1) angeordnetes und an beiden Enden offenes Rohr (43, 44, 45, 54, 55, 56),
wobei die wenigstens eine Leitung (47, 58) in das Rohr (43, 44, 45, 54, 55, 56) zur Einbringung von Gas zumindest am unteren Ende des Rohrs (43, 44, 45, 54, 55, 56) mündet,
wobei das Rohr aus einer Mehrzahl von aneinander anschließenden Einzelrohren (43, 44, 45, 54, 55, 56) besteht, wobei jedes Einzelrohr jeweils einen größeren Durchmesser als das darunter vorgesehene Einzelrohr aufweist,
**dadurch gekennzeichnet, dass** in vertikaler Richtung aneinander anschließende Einzelrohre (43, 44, 45, 54, 55, 56) miteinander über eine flexible Aufhängung (48, 59) gekoppelt sind.

2. Schlammbehälter nach Anspruch 1, **dadurch gekennzeichnet, dass** das Rohr (43, 44, 45, 54, 55, 56) mit einem sich nach oben erweiternden Querschnitt ausgebildet ist.

3. Schlammbehälter nach Anspruch 1 oder 2, **dadurch gekennzeichnet, dass** das Rohr (43, 44, 45, 54, 55, 56) an seinem unteren Ende mit einer trompetenförmigen Ansaugöffnung (50) ausgebildet ist und die Mündung der wenigstens einen Leitung (47, 58) in die Ansaugöffnung (50) führt.

4. Schlammbehälter nach Anspruch 1, 2 oder 3, **dadurch gekennzeichnet, dass** in das Rohr (43, 44, 45, 54, 55, 56) eine Mehrzahl von Leitungen (47, 58) an unterschiedlichen Stellen des Umfangs des Rohrs und/oder an unterschiedlichen Höhenpositionen des Rohrs mündet.

5. Schlammbehälter nach einem der Ansprüche 1 bis 4, **dadurch gekennzeichnet, dass** die Einzelrohre (43, 44, 45, 54, 55, 56) an ihrem zum Boden des Schlammbehälters (1) gerichteten Ende im Bereich eines mündenden darunter anschließenden Einzelrohrs schirmartig ausgebildet sind, und/oder dass jeweils am unteren Ende eines Einzelrohrs (43, 44, 45, 54, 55, 56), insbesondere im schirmartigen Bereich wenigstens eine Leitung (47, 58) mündet.

6. Schlammbehälter nach einem der Ansprüche 1 bis 5, **dadurch gekennzeichnet, dass** die Einzelrohre (54, 55, 56) relativ zueinander höhenverstellbar im Schlammbehälter (1) angeordnet sind.

7. Schlammbehälter nach einem der Ansprüche 1 bis 6, **dadurch gekennzeichnet, dass** unterhalb des offenen Endes des im Wesentlichen vertikalen Rohrs eine mit einer Gaszuführung versehene Siebplatte angeordnet ist.

8. Schlammbehälter nach einem der Ansprüche 1 bis 7, **dadurch gekennzeichnet, dass** das Rohr (43, 44, 45, 54, 55, 56) mit einer flexiblen Aufhängung (49, 53) an einer Aufhängevorrichtung des Schlammbehälters (1) festgelegt ist, und/oder dass flexible Aufhängungen (48) zwischen benachbarten Einzelrohren (43, 44, 45) jeweils zueinander versetzt am Umfang derselben angeordnet bzw. festgelegt sind, und/oder dass die Aufhängung (59) der Einzelrohre (54, 55, 56) mit einer Aufhängung (53) für eine im Bodenbereich des Schlammbehälters (1) angeordnete Räumvorrichtung (52) gekoppelt ist.

9. Schlammbehälter nach einem der Ansprüche 1 bis 8, **dadurch gekennzeichnet, dass** die wenigstens eine Leitung (47, 58) über einen mit einem Sieb und/oder Filter ausgebildeten Verteiler (46, 57) in das Rohr (43, 44, 45, 54, 55, 56) mündet.

10. Schlammbehälter nach einem der Ansprüche 1 bis 9, **dadurch gekennzeichnet, dass** eine Mehrzahl von jeweils im Wesentlichen vertikal im Schlammbehälter (1) angeordneten Rohren (43, 44, 45, 54, 55, 56) vorgesehen ist, in welche jeweils wenigstens eine Leitung (47, 58) zur Einbringung von Gas mündet.

11. Schlammbehälter nach einem der Ansprüche 1 bis 10, **dadurch gekennzeichnet, dass** die wenigstens eine Leitung (47, 58) aus einem wärmeleitenden Material ausgebildet ist.

12. Schlammbehälter nach einem der Ansprüche 1 bis 11, **dadurch gekennzeichnet, dass** das Rohr mit wenigstens einer zusätzlichen Belüftungsöffnung in Abstand von seinen beiden offenen Enden ausgebildet ist.

13. Schlammbehälter nach einem der Ansprüche 1 bis 12, **dadurch gekennzeichnet, dass** das im Wesentlichen vertikal im Schlammbehälter (1) angeordnete Rohr in einem bestehenden Steigrohr des Schlammbehälters (1) mit gegenüber dem Durchmesser des Steigrohrs verringerten Außenabmessungen angeordnet ist.

14. Verfahren zur Gaseinpressung in einen Schlammbehälter (1) mit einer Vorrichtung nach einem der Ansprüche 1 bis 13, wobei Gas über wenigstens eine Leitung oberhalb des Bodens des mit einem insbesondere Feststoffe bzw. Partikel enthaltenden Fluid gefüllten Schlammbehälters (1) eingebracht wird, wobei das Gas über die Leitung (47, 58) in ein im Wesentlichen vertikales im Schlammbehälter (1) angeordnetes und an beiden Enden offenes Rohr (43, 44, 45, 54, 55, 56) am unteren Ende des Rohrs eingebracht wird, wobei das Rohr aus einer Mehrzahl von aneinander anschließenden Einzelrohren (43, 44, 45, 54, 55, 56) gebildet wird und jedes Einzelrohr jeweils einen größeren Durchmesser als das darunter vorgesehene Einzelrohr aufweist, **dadurch gekennzeichnet, dass** in vertikaler Richtung aneinander anschließende Einzelrohre (43, 44, 45, 54, 55, 56) miteinander über eine flexible Aufhängung (48, 59) gekoppelt werden.

15. Verfahren nach Anspruch 14, **dadurch gekennzeichnet, dass** das Gas an unterschiedlichen über den Umfang des Rohrs (43, 44, 45, 54, 55, 56) verteilten Positionen und/oder an unterschiedlichen Höhenpositionen des Rohrs eingebracht wird, und/oder dass von dem Gas mitzuführendes, in dem Schlammbehälter (1) vorhandenes und insbesondere Feststoffe bzw. Partikel aufweisendes Fluid an unterschiedlichen Höhenpositionen in das Rohr (43, 44, 45, 54, 55, 56) eingebracht wird.

16. Verfahren nach Anspruch 14 oder 15, **dadurch gekennzeichnet, dass** das durch die Leitung (47, 58) transportierte Gas vor dem Einbringen in die Leitung über einen Wärmetauscher geführt wird.

## Claims

1. A sludge tank with a device for gas injection, comprising:
- at least one conduit (47, 58) for introducing gas above the bottom of the sludge tank (1) filled with a fluid, in particular containing solids or particles,
- a tube (43, 44, 45, 54, 55, 56) disposed substantially vertically in the sludge tank (1) and open on both ends,
wherein the at least one conduit (47, 58) opens into the tube (43, 44, 45, 54, 55, 56) at least on the lower end of the tube (43, 44, 45, 54, 55, 56) for introducing gas,
wherein the tube is comprised of a plurality of adjacent single tubes (43, 44, 45, 54, 55, 56), wherein each single tube has a respectively larger diameter than the single tube disposed therebelow,
**characterized in that** single tubes (43, 44, 45, 54, 55, 56) adjacent in the vertical direction are mutually coupled by a flexible suspension (48, 59).

2. A sludge tank according to claim 1, **characterized in that** the tube (43, 44, 45, 54, 55, 56) is formed with a upwardly widening cross section.

3. A sludge tank according to claim 1 or 2, **characterized in that** the tube (43, 44, 45, 54, 55, 56) is formed with a trumpet-like suction aperture (50) on its lower end, and the mouth of the at least one conduit (47, 58) opens into the suction aperture (50).

4. A sludge tank according to claim 1, 2 or 3, **characterized in that** a plurality of conduits (47, 58) open into the tube (43, 44, 45, 54, 55, 56) at different points of the circumference of the tube and/or on different height levels of the tube.

5. A sludge tank according to any one of claims 1 to 4, **characterized in that** the single tubes (43, 44, 45, 54, 55, 56) are umbrella-shaped on their ends oriented to the bottom of the sludge tank (1), in the region of an opening single tube adjacent therebelow, and/or that at least one conduit (47, 58) each opens on the lower end of a single tube (43, 44, 45, 54, 55, 56), in particular in the umbrella-shaped region.

6. A sludge tank according to any one of claims 1 to 5, **characterized in that** the single tubes (54, 55, 56) are disposed in the sludge tank (1) so as to be height-adjustable relative to one another.

7. A sludge tank according to any one of claims 1 to 6, **characterized in that** a sieve plate provided with a gas supply is disposed below the open end of the substantially vertical tube.

8. A sludge tank according to any one of claims 1 to 7, **characterized in that** the tube (43, 44, 45, 54, 55, 56) is fixed to a suspension device of the sludge tank (1) by a flexible suspension (49, 53), and/or that flexible suspensions (48), between adjacent single tubes (43, 44, 45), are each disposed about, or fixed to, the circumferences of the same in a relatively offset manner, and/or that the suspensions (59) of the single tubes (54, 55, 56) are coupled to a suspension (53) for a clearing device (52) disposed in the bottom region of the sludge tank (1).

9. A sludge tank according to any one of claims 1 to 8, **characterized in that** the at least one conduit (47, 58) opens into the tube (43, 44, 45, 54, 55, 56) via a manifold (46, 57) provided with a sieve and/or a filter.

10. A sludge tank according to any one of claims 1 to 9, **characterized in that** a plurality of tubes (43, 44, 45, 54, 55, 56) each disposed substantially vertically in the sludge tank (1) are provided, into which at least one conduit (47, 58) each enters for introducing gas.

11. A sludge tank according to any one of claims 1 to 10, **characterized in that** the at least one conduit (47, 58) is made of a thermally conductive material.

12. A sludge tank according to any one of claims 1 to 11, **characterized in that** the tube is formed with at least one additional air vent at a distance of its two open ends.

13. A sludge tank according to any one of claims 1 to 12, **characterized in that** the tube disposed substantially vertically in the sludge tank (1) is disposed in an existing standpipe of the sludge tank (1) with external dimensions reduced relative to the diameter of the standpipe.

14. A method for gas injection into a sludge tank (1) using a device according to any one of claims 1 to 13, wherein gas is introduced via at least one conduit above the bottom of the sludge tank (1) filled with a fluid, in particular containing solids or particles, wherein the gas is introduced via the conduit (47, 58) into a substantially vertical tube (43, 44, 45, 54, 55, 56) disposed in the sludge tank (1) and open on both ends, on the lower end of the tube, wherein the tube is comprised of a plurality of adjacent single tubes (43, 44, 45, 54, 55, 56) and each single tube has a respectively larger diameter than the single tube disposed therebelow, **characterized in that** single tubes (43, 44, 45, 54, 55, 56) adjacent in the vertical direction are mutually coupled by a flexible suspension (48, 59).

15. A method according to claim 14, **characterized in that** the gas is introduced at different positions distributed about the circumference of the tube (43, 44, 45, 54, 55, 56) and/or on different height levels of the tube, and/or that fluid to be carried along by the gas, which is present in the sludge tank (1) and, in particular, comprises solids or particles, is introduced into the tube (43, 44, 45, 54, 55, 56) on different height levels.

16. A method according to claim 14 or 15, **characterized in that** the gas transported through the conduit (47, 58) is conducted through a heat exchanger prior to being introduced into the conduit.

## Revendications

1. Contenant de boues avec un dispositif servant à l'injection de gaz, comprenant :
- au moins un conduit (47, 58) servant à introduire du gaz au-dessus du fond du contenant de boues (1) rempli d'un fluide contenant en particulier des matières solides ou des particules,
- un tuyau (43, 44, 45, 54, 55, 56) disposé sensiblement de manière verticale dans le contenant de boues (1) et ouvert aux deux extrémités,
au moins un conduit (47, 58) débouchant dans le tuyau (43, 44, 45, 54, 55, 56) pour l'introduction de gaz au moins à l'extrémité inférieure du tuyau (43, 44, 45, 54, 55, 56),
le tuyau étant constitué d'une multitude de tuyaux individuels (43, 44, 45, 54, 55, 56) se raccordant les uns aux autres, chaque tuyau individuel présentant respectivement un diamètre plus grand que le tuyau individuel prévu en dessous,
**caractérisé en ce que** des tuyaux individuels (43, 44, 45, 54, 55, 56) se raccordant les uns aux autres dans une direction verticale sont couplés les uns aux autres par l'intermédiaire d'une suspension (48, 59) flexible.

2. Contenant de boues selon la revendication 1, **caractérisé en ce que** le tuyau (43, 44, 45, 54, 55, 56) est réalisé avec une section transversale s'élargissant vers le haut.

3. Contenant de boues selon la revendication 1 ou 2, **caractérisé en ce que** le tuyau (43, 44, 45, 54, 55, 56) est réalisé, à son extrémité inférieure, avec une ouverture d'aspiration (50) en forme de trompette et l'embouchure d'au moins un conduit (47, 58) mène dans l'ouverture d'aspiration (50).

4. Contenant de boues selon la revendication 1, 2 ou 3, **caractérisé en ce qu'**une multitude de conduits (47, 58) débouchent dans le tuyau (43, 44, 45, 54, 55, 56) au niveau de différents emplacements de la périphérie du tuyau et/ou au niveau de différentes positions en hauteur du tuyau.

5. Contenant de boues selon l'une quelconque des revendications 1 à 4, **caractérisé en ce que** les tuyaux individuels (43, 44, 45, 54, 55, 56) sont réalisés à la manière d'un parapluie, à leur extrémité dirigée vers le fond du contenant de boues (1), dans la zone d'un tuyau individuel se raccordant en dessous débouchant, et/ou qu'au moins un conduit (47, 58) débouche respectivement à l'extrémité inférieure d'un tuyau individuel (43, 44, 45, 54, 55, 56), en particulier dans la zone de type parapluie.

6. Contenant de boues selon l'une quelconque des revendications 1 à 5, **caractérisé en ce que** les tuyaux individuels (54, 55, 56) sont disposés dans le contenant de boues (1) de manière ajustable en hauteur les uns par rapport aux autres.

7. Contenant de boues selon l'une quelconque des revendications 1 à 6, **caractérisé en ce qu'**une plaque de criblage pourvue d'une arrivée de gaz est disposée sous l'extrémité ouverte du tuyau sensiblement vertical.

8. Contenant de boues selon l'une quelconque des revendications 1 à 7, **caractérisé en ce que** le tuyau (43, 44, 45, 54, 55, 56) est fixé avec une suspension (49, 53) flexible à un dispositif de suspension du contenant de boues (1), et/ou que des suspensions (48) flexibles sont disposées ou fixées entre des tuyaux individuels (43, 44, 45) adjacents respectivement de manière décalée les uns par rapport .aux autres au niveau de la périphérie de ceux-ci, et/ou que la suspension (59) des tuyaux individuels (54, 55, 56) est couplée à une suspension (53) pour un dispositif d'évacuation (52) disposé dans la zone de fond du contenant de boues (1).

9. Contenant de boues selon l'une quelconque des revendications 1 à 8, **caractérisé en ce qu'**au moins un conduit (47, 58) débouche dans le tuyau (43, 44, 45, 54, 55, 56) par l'intermédiaire d'un distributeur (46, 57) réalisé avec un crible et/ou un filtre.

10. Contenant de boues selon l'une quelconque des revendications 1 à 9, **caractérisé en ce qu'**une multitude de tuyaux (43, 44, 45, 54, 55, 56) disposés respectivement sensiblement de manière verticale dans le contenant de boues (1) sont prévus, dans lesquels respectivement au moins un conduit (47, 58) débouche pour l'introduction de gaz.

11. Contenant de boues selon l'une quelconque des revendications 1 à 10, **caractérisé en ce qu'**au moins un conduit (47, 58) est réalisé à partir d'un matériau thermoconducteur.

12. Contenant de boues selon l'une quelconque des revendications 1 à 11, **caractérisé en ce que** le tuyau est réalisé avec au moins une ouverture de ventilation supplémentaire à distance de ses deux extrémités ouvertes.

13. Contenant de boues selon l'une quelconque des revendications 1 à 12, **caractérisé en ce que** le tuyau disposé sensiblement de manière verticale dans le contenant de boues (1) est disposé dans un tuyau ascendant existant du contenant de boues (1) avec des dimensions extérieures réduites par rapport au diamètre du tuyau ascendant.

14. Procédé d'injection de gaz dans un contenant de boues (1) avec un dispositif selon l'une quelconque des revendications 1 à 13, du gaz étant introduit par l'intermédiaire d'au moins un conduit au-dessus du fond du contenant de boues (1) rempli d'un fluide contenant en particulier des matières solides ou des particules, le gaz étant introduit par l'intermédiaire du conduit (47, 58) dans un tuyau (43, 44, 45, 54, 55, 56) sensiblement vertical disposé dans le contenant de boues (1) et ouvert aux deux extrémités à l'extrémité inférieure du tuyau, le tuyau étant formé à partir d'une multitude de tuyaux individuels (43, 44, 45, 54, 55, 56) se raccordant les uns les autres et chaque tuyau individuel présentant respectivement un diamètre plus grand que le tuyau individuel prévu en dessous, **caractérisé en ce que** des tuyaux individuels (43, 44, 45, 54, 55, 56) se raccordant les uns les autres dans une direction verticale sont couplés les uns aux autres par l'intermédiaire d'une suspension (48, 59) flexible.

15. Procédé selon la revendication 14, **caractérisé en ce que** le gaz est introduit au niveau de différentes positions réparties sur la périphérie du tuyau (43, 44, 45, 54, 55, 56) et/ou au niveau de différentes positions en hauteur du tuyau, et/ou qu'un fluide à transporter par le gaz, présent dans le contenant de boues (1) et présentant en particulier des matières solides ou des particules est introduit au niveau de différentes positions en hauteur dans le tuyau (43, 44, 45, 54, 55, 56) .

16. Procédé selon la revendication 14 ou 15, **caractérisé en ce que** le gaz transporté à travers le conduit (47, 58) est guidé, avant l'introduction dans le conduit, par l'intermédiaire d'un échangeur de chaleur.
